## Europäisches Patentamt

## European Patent Office

## Office européen des brevets

(11) Veröffentlichungsnummer : **0 193 218 B1**

(12) **EUROPÄISCHE PATENTSCHRIFT**

(45) Veröffentlichungstag der Patentschrift :
28.09.88

(21) Anmeldenummer : 86200084.1

(22) Anmeldetag : 21.01.86

(51) Int. Cl.⁴ : **F 16 C 33/20, F 16 C 33/04**

(54) Gleitlager.

(30) Priorität : 16.02.85 DE 3505374

(43) Veröffentlichungstag der Anmeldung :
03.09.86 Patentblatt 86/36

(45) Bekanntmachung des Hinweises auf die Patenterteilung : 28.09.88 Patentblatt 88/39

(84) Benannte Vertragsstaaten :
AT DE FR GB IT SE

(56) Entgegenhaltungen :
DE-A- 2 818 184
FR-A- 2 073 172
FR-A- 2 357 777
FR-A- 2 383 779

(73) Patentinhaber : KOLBENSCHMIDT Aktiengesellschaft
Christian-Schmidt-Strasse 8/12 Postfach 1351
D-7107 Neckarsulm (DE)

(72) Erfinder : Bickle, Wolfgang
Friedenstrasse 15
D-6831 Reilingen (DE)
Erfinder : Braus, Jürgen
Johann-Jakob-Astor-Strasse 53
D-6909 Walldorf (DE)
Erfinder : Baureis, Hans-Paul
Höhenweg 5
D-6909 Dielheim Horrenberg (DE)

(74) Vertreter : Rieger, Harald, Dr.
Reuterweg 14
D-6000 Frankfurt am Main (DE)

## Beschreibung

Die Erfindung betrifft ein Gleitlager, bei dem auf einen 0,5 bis 2,5 mm dicken metallischen Stützrücken, vorzugsweise aus Stahl, Bronze oder einer hochfesten Aluminiumlegierung, eine 0,2 bis 0,4 mm dicke Trägerschicht aus Zinnbronze, Zinnbleibronze oder einer Aluminium-Lagerlegierung porös aufgebracht ist und deren Poren mit einem Gemisch aus Polytetrafluoräthylen (PTFE) und 15 bis 25 Vol.% eines die Wärmeleitfähigkeit und Verschleißfestigkeit verbessernden Füllstoffs vollständig ausgefüllt sind und auf der sich eine 0,01 bis 0,03 mm dicke Gleitschicht des PTFE/Füllstoff-Gemisches befindet.

Diese Anordnung, wie sie beispielsweise in VDI-Z. 110 (1968) Nr. 15, Seiten 632-636 beschrieben ist, schafft die Voraussetzung, daß die außergewöhnlichen Eigenschaften des PTFE, nämlich niedriger Reibungskoeffizient, antiaggressives Verhalten, hohe Temperaturbeständigkeit von — 200 bis + 280° C und große chemische Resistenz voll ausgenutzt werden können, ohne Beeinträchtigung durch seine weniger vorteilhaften Eigenschaften. PTFE weist eine relativ geringe Festigkeit, eine hohe Wärmeausdehnung und eine schlechte Wärmeleitung auf. Diese Nachteile werden eliminiert durch den metallischen Stützrücken und die porös aufgesinterte Trägerschicht. Beide verleihen dem Gleitlager eine Druckfestigkeit von 360 N/mm² und ein stahlähnliches Ausdehnungsverhalten. Die Trägerschicht armiert einerseits das PTFE und gewährt andererseits eine gute Wärmeableitung aus dem Lagerspalt. Das Gemisch aus PTFE und Blei übernimmt dabei vergleichsweise die Funktion eines Dauer- oder Festschmierstoffs. Das Gleitlager kann ohne jedes Schmiermittel verwendet werden und zwar im Dauerbetrieb bis zu pv-Werten von 1,8 N/mm² und im intermitierenden Betrieb bis zu 3,6 N/mm². Bei Trockenlauf und Ausnutzung der genannten pv-Faktoren sollte die Gleitgeschwindigkeit von v = 2 mm/s nicht überschritten werden. Nach beendetem Einlaufen ist der Verschleiß bis zu einer Verschleißtiefe von etwa 0,04 bis 0,05 mm proportional dem pv-Faktor. Die Lebensdauer des Gleitlagers ist daher umgekehrt proportional dem pv-Faktor. Die vorstehend beschriebenen Eigenschaften bieten eine große Fülle von Möglichkeiten des Einsatzes des Gleitlagers zur Lösung von Lager- und Verschleißproblemen. So kann z. B. im Bereich des Maschinenbaus vielfach auf die zum Teil sehr aufwendigen Einrichtungen herkömmlicher Schmiersysteme verzichtet werden. Nicht zuletzt wird durch Trockenlaufen der Lager eine größere Betriebssicherheit erreicht, weil es keiner Wartung, also keiner Nachschmierung bedarf. Nachteilig ist jedoch, daß die aus diesem wartungsfreien Gleitlager gefertigten Lagerelemente bei Wechsellast, bei der Lagerfläche und Gegenlauffläche häufig getrennt werden, in schmierstoffhaltiger Umgebung, z. B. in Stoßdämpfern, Hydraulikpumpen oder dergleichen, nicht einsetzbar sind, weil unter diesen Bedingungen die Schmierstoffe eine Erosion des PTFE/Blei-Gemisches als Folge auftretender Kavitation hervorrufen.

Die FR-A-2 073 172 befaßt sich mit einem Gleitlager, bestehend aus einem mit Poren versehenen metallischen Träger, einer Füllung der Poren mit schmelzbarem Fluorpolymer und einer auf dem Träger und der Füllung angeordneten, mindestens 5 μm dicken Deckschicht, die als Unterlage für eine überdeckende Schicht aus schmelzbarem Fluorpolymer mit metallischen und/oder nichtmetallischen Zusätzen dient. Die als Haftschicht für die überdeckende Schicht wirkende Deckschicht ist wenig belastbar, da sie im Falle hoher Belastungen nicht die notwendige Festigkeit besitzt.

Aufgabe der vorliegenden Erfindung ist es daher, das eingangs dargestellte Gleitlager so zu verbessern, daß die daraus hergestellten Lagerelemente auch für solche Gleitlagerungen verwendet werden können, bei denen Wechsellast in Gegenwart von Schmierstoffen auftritt.

Die Lösung dieser Aufgabe besteht darin, daß die zur Gleitfläche weisende Oberfläche der Trägerschicht mit einer 2 bis 10 μm dicken Schicht eines Haftvermittlers überzogen ist, die aus Chromphosphat mit eingelagerten PTFE-Teilchen besteht und an die beim Sintern des PTFE/Füllstoff-Gemisches die benachbarten PTFE-Teilchen der Gleitschicht angesintert sind. Durch diese Maßnahme wird nicht nur eine verbesserte Haftung der aus dem PTFE/Füllstoff-Gemisch bestehenden Gleitschicht auf der Trägerschicht, sondern auch ein geringerer Verschleiß erreicht.

Bei dem Verfahren zur Herstellung des erfindungsgemäßen Gleitlagers wird auf einen metallischen Stützrücken eine poröse metallische Trägerschicht, z. B. durch Sintern eines metallischen Pulvers mit einer Korngröße von 80 bis 200 μm bei einer Temperatur von 800 bis 850° C oder durch Plasmabeschichtung, aufgebracht, unmittelbar danach eine Mischung aus 90 bis 110 Teilen einer PTFE-Dispersion, 10 bis 30 Teilen Chromphosphat und 20 bis 50 Teilen destilliertem Wasser auf die Trägerschicht aufgetragen, bei 265 bis 300° C getrocknet und abschließend das PTFE/Füllstoff-Gemisch aufgewalzt und bei 390 bis 410° C gesintert.

Der mit der Erfindung erzielte Vorteil ist insbesondere darin zu sehen, daß die Haftfestigkeit der aus dem PTFE/Füllstoff-Gemisch bestehenden Gleitschicht auf der Trägerschicht von herkömmlich 3,5 bis 4,5 N/mm² und der Verschleiß von herkömmlich 0,54 μm/km auf eine Haftfestigkeit von 6,5 bis 7,5 N/mm² erhöht und der Verschleiß auf 0,38 μm/km gesenkt werden konnten.

Die Erfindung ist im folgenden anhand eines durch den Gleitlagerwerkstoff gelegten Querschnitts näher und beispielhaft erläutert.

Bei einer Lagerbuchse ist auf einen Stahlstützrücken (1) eine Trägerschicht (2) aus knollenförmigem Bronzepulver (80 Gew.-% Cu, 10 Gew.-%

Pb, 10 Gew.-% Sn) porös aufgesintert. Die Poren der Bronzeschicht (2), deren mittlere Porosität 30 % beträgt, sind mit einem Gemisch (5) aus 80 % PTFE und 20 % Bleipulver in der Weise ausgefüllt, daß sich über den Spitzen der Bronzeschicht noch eine etwa 25 μm dicke Gleitschicht (4) aus dem PTFE/Blei-Gemisch (5) befindet. Die zur Gleitfläche weisende Oberfläche der Bronzeschicht (2) ist mit einer 2 bis 5 μm dicken Haftvermittlerschicht (3) aus Chromphosphat mit darin eingelagerten PTFE-Teilchen beschichtet.

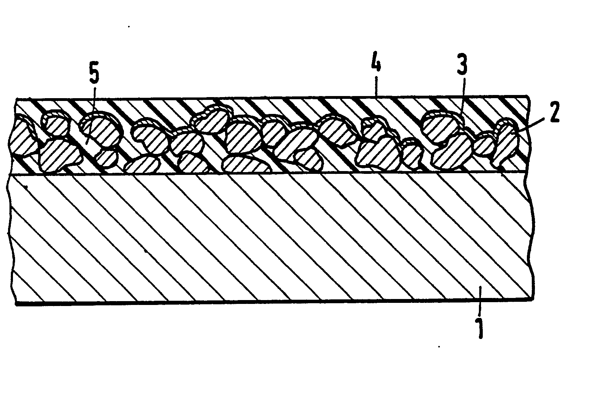

**Patentansprüche**

1. Gleitlager, bei dem auf einen 0,5 bis 2,5 mm dicken metallischen Stützrücken (1), vorzugsweise aus Stahl, Bronze oder einer hochfesten Aluminiumlegierung, eine 0,2 bis 0,4 mm dicke Trägerschicht (2) aus Zinnbronze, Zinnbleibronze oder einer Aluminium-Lagerlegierung porös aufgebracht ist und deren Poren mit einem Gemisch (5) aus Polytetrafluoräthylen (PTFE) und 15 bis 25 Vol.% eines die Wärmeleitfähigkeit und Verschleißfestigkeit verbessernden Füllstoffs vollständig ausgefüllt sind und auf der sich eine 0,01 bis 0,03 mm dicke Gleitschicht (4) des PTFE/Füllstoff-Gemisches befindet, dadurch gekennzeichnet, daß die zur Gleitfläche weisende Oberfläche der Trägerschicht (2) mit einer 2 bis 10 μm dicken Schicht (3) eines Haftvermittlers aus Chromphosphat mit eingelagerten PTFE-Teilchen überzogen ist.

2. Verfahren zur Herstellung des Gleitlagers nach Anspruch 1, dadurch gekennzeichnet, daß auf einen metallischen Stützrücken eine poröse metallische Trägerschicht aufgebracht, unmittelbar danach eine Mischung aus 90 bis 110 Teilen PTFE-Dispersion, 10 bis 30 Teilen Chromphosphat und 20 bis 50 Teilen destilliertem Wasser auf die Trägerschicht aufgetragen, bei 265 bis 300° C getrocknet und danach das PTFE/Füllstoff-Gemisch aufgewalzt und bei 390 bis 410° C gesintert wird.

**Claims**

1. Sliding bearing, in which a 0.2 to 0.4 mm thick carrier layer (2) of tin bronze, leaded bronze or an aluminium bearing alloy is applied porously to a 0.5 to 2.5 mm thick metallic backing (1), preferably of steel, bronze or a high-strength aluminium alloy, and the pores of which are completely filled with a mixture (5) of polytetrafluoroethylene (PTFE) and 15 to 25 % vol. of a filler improving the thermal conductivity and resistance to wear, and on which there is a 0.01 to 0.03 mm thick sliding layer (4) of the PTFE/filler mixture, characterised in that the surface of the carrier layer (2) facing the sliding surface is coated with a 2 to 10 μm thick layer (3) of a bonding agent of chromium phosphate with embedded PTFE particles.

2. Method for producing the sliding bearing according to Claim 1, characterised in that a porous metallic carrier layer is applied to a metallic backing, immediately thereafter a mixture of 90 to 110 parts PTFE dispersion, 10 to 30 parts chromium phosphate and 20 to 50 parts distilled water is applied to the carrier layer, dried at 265 to 300° C and thereafter the PTFE/filler mixture is applied by rolling and is sintered at 390 to 410° C.

**Revendications**

1. Palier lisse, dans lequel sur une base de support métallique (1) possédant une épaisseur comprise entre 0,5 et 2,5 mm et réalisée de préférence en acier, en bronze ou en un alliage d'aluminium très résistant, se trouve déposée sous une forme poreuse, une couche de support (2) possédant une épaisseur comprise entre 0,2 et 0,4 mm et constituée par du bronze ordinaire, un alliage cuivre-plomb-étain ou un alliage d'aluminium pour paliers, et dont les pores sont remplis par un mélange (5) formé de polytétrafluoroéthylène (PTFE) et de 15 à 25 % en volume d'une substance de remplissage améliorant la conductibilité thermique et la résistance à l'usure et sur laquelle se trouve disposée une couche de glissement (4) possédant une épaisseur comprise entre 0,01 et 0,03 mm et constituée par le mélange de PTFE/substance de remplissage, caractérisé par le fait que la surface de la couche de support (2), qui est tournée vers la surface de glissement, est recouverte par une couche (3) possédant une épaisseur comprise entre 2 et 10 μm et formée par un agent adhésif à base de phosphate de chrome dans lequel sont noyées des particules de PTFE.

2. Procédé pour fabriquer le palier lisse selon la revendication 1, caractérisé en ce qu'on dépose une couche de support métallique poreuse sur une base de support métallique, qu'on dépose aussitôt après, sur la couche de support, un mélange formé de 90 à 110 parties d'une dispersion de PTFE, de 10 à 30 parties de phosphate de chrome et de 20 à 50 parties d'eau distillée, qu'on fait sécher ce mélange à une température comprise entre 265 et 300° C, qu'on exécute ensuite un laminage du mélange PTFE/substance de remplissage et qu'on fritte ce mélange à une température comprise entre 390 et 410° C.